# EUROPÄISCHE PATENTSCHRIFT

(11) **EP 1 673 265 B1**
(45) Veröffentlichungstag und Bekanntmachung des Hinweises auf die Patenterteilung: **18.04.2007**
(21) Anmeldenummer: 04765885.1
(22) Anmeldetag: 08.10.2004
(51) Int. Cl.: B60T 8/00, B60T 8/32

(54) **ELEKTRONISCHE SCHALTUNGSANORDNUNG ZUM WAHLWEISEN ANSCHLUSS VON DREHZAHLSENSOREN, INSBESONDERE BEI NUTZFAHRZEUGEN**
ELECTRONIC CIRCUIT ARRANGEMENT FOR THE OPTIONAL CONNECTION OF SPEED SENSORS, ESPECIALLY IN UTILITY VEHICLES
ENSEMBLE CIRCUIT ELECTRONIQUE POUR LE RACCORDEMENT SELECTIF DE CAPTEURS DE VITESSE DE ROTATION, EN PARTICULIER DANS DES VEHICULES UTILITAIRES

(30) Priorität: 10.10.2003 DE 10347117
(43) Veröffentlichungstag der Anmeldung: 28.06.2006
(73) Patentinhaber: KNORR-BREMSE SYSTEME FÜR NUTZFAHRZEUGE GMBH, 80809 München (DE)
(72) Erfinder: GSCHOSSMANN, Günther, 84539 Ampfing (DE)
(86) Internationale Anmeldenummer: PCT/EP2004/011247
(87) Internationale Veröffentlichungsnummer: WO 2005/035329

(56) Entgegenhaltungen:
- DE-A- 10 022 457
- US-A- 4 847 555
- US-A- 5 500 585

## Beschreibung

Die vorliegende Erfindung betrifft eine elektronische Schaltungsanordnung zum Anschluss mindestens eines Drehzahlsensors eines Fahrzeuges über eine zugeordnete Signalkonditionierungsschaltung an eine elektronische Steuereinheit zur weiteren Signalverarbeitung des Drehzahlsignals, die aus der DE 100 22 457 bekannt ist.

Drehzahlsensoren der hier interessierenden Art werden in der Fahrzeugtechnik dafür benötigt, um eine der wichtigsten Eingangsgrößen für die elektronische Steuerung eines Fahrzeugs zu gewinnen. So sind herkömmliche Antiblockiersysteme (ABS), Antischlupfregelungen (ARS) und Fahrstabilitätsregelungen (FSR, ASMS) auf das permanente Messen und Auswerten des Drehzahlverlaufs der einzelnen Fahrzeugräder angewiesen. Die Drehzahlsignale jedes einzelnen Fahrzeugrades werden erfasst und über eine Sensorleitung zu einer elektronischen Steuereinheit zwecks Auswertung übertragen.

Es existieren Drehzahlsensoren sehr unterschiedlicher Bauweise und Leistungsfähigkeit. Die in Fahrzeugen eingesetzten Drehzahlsensoren bestehen allerdings grundsätzlich aus einem mit dem Rad rotierenden Encoder in Gestaltung einer Zahnscheibe, Lochscheibe, o.ä. und aus einem ortsfesten Messwertaufnehmer. Aus technologischen und preislichen Gründen wurden bisher induktive Sensoren bzw. Messwertaufnehmer bevorzugt, in denen der Encoder ein der Drehbewegung des Fahrzeugrades entsprechendes Wechselsignal hervorruft. Die Frequenz des Wechselsignals wird in unterschiedlicher Weise zur Gewinnung der Drehzahlinformationen ausgewertet.

Die gegenwärtig größte Verbreitung haben sogenannte passive Drehzahlsensoren, die nach dem Reluktanzprinzip arbeiten. Diese Drehzahlsensoren besitzen als Messwertaufnehmer eine Kupferspule mit einem Permanentmagneten. Der Messwertaufnehmer ist magnetisch an die als Messwertgeber dienende Zählscheibe oder einen anderen Encoder gekoppelt. Der Encoder moduliert bewegungssynchron die magnetische Koppelreluktanz, wobei in der Kupferspule eine die Bewegung darstellende Wechselspannung induziert wird, deren Frequenz sich als Messgröße zur Ermittlung der Raddrehzahl auswerten lässt. Die Höhe der induzierten Signalspannung ist abhängig von der Drehgeschwindigkeit und von dem Luftspalt zwischen Messwertgeber und Messwertaufnehmer bzw. zwischen der Verzahnung und dem Drehzahlsensor.

Daneben sind auch sogenannte aktive Drehzahlsensoren allgemein bekannt, auf welche sich der Gegenstand der vorliegenden Erfindung bezieht. Aktive Drehzahlsensoren bestehen im Prinzip aus der Kombination eines magnetostatisch empfindlichen Elements mit einem Permanentmagneten, der magnetisch an den Encoder gekoppelt ist. Der Encoder moduliert auch hierbei bewegungssynchron die magnetische Koppelreluktanz oder die Feldrichtung, wobei das Sensorelement mit der Änderung der Flussdichte oder auf die Bewegung eines Feldvektors anspricht. Bekannte Beispiele solcher magnetostatisch empfindlichen Elemente sind Hall-Sonden und magnetoresistive Strukturen auf der Basis von Permalloy-Legierungen. Die Höhe der Signalspannung am Drehzahlsensor ist abhängig vom Luftspalt, jedoch unabhängig von der Drehzahl bzw. Frequenz. Aktive Drehzahlsensoren gewinnen daher mehr und mehr an Bedeutung.

Aus der WO 95/17650 ist ein gattungsgemäßer aktiver Drehzahlsensor bekannt. Der ortsfeste Teil des Drehzahlsensors enthält ein magnetoresistives Sensorelement mit einem als Vorspannmagneten dienenden Permanentmagneten und außerdem elektronische Schaltungsbestandteile zur Signalkonditionierung. Ein aktiver Drehzahlsensor benötigt eine Stromversorgung. Das Ausgangssignal des aktiven Drehzahlsensors ist ein binäres Stromsignal, das sich aus eingeprägten Strömen unterschiedlicher Amplitude zusammensetzt. Die Drehzahlinformation steckt in der Frequenz bzw. in dem Wechsel zwischen den beiden Strom-Niveaus. Bekannte Drehzahlsensoren dieser Art rufen ein Rechtecksignal hervor, dessen Frequenz die gemessene Drehzahl wiedergibt.

Zur Weiterverarbeitung der vom aktiven Drehzahlsensor gelieferten Information wird gewöhnlich ein Mikrokontroller eingesetzt, dem eingangsseitig die Signalkonditionierungsschaltung vorgeschaltet ist. Auch ein passiver Drehzahlsensor erfordert eine Signalkonditionierungsschaltung für den Anschluss an einen Mikrokontroller als elektronische Steuereinheit zur weiteren Signalverarbeitung des Drehzahlsignals. Da die Signalkonditionierungsschaltung zum Anschluss eines aktiven Drehzahlsensors unterschiedlich aufgebaut ist zu der Signalkonditionierungsschaltung zum Anschluss eines passiven Drehzahlsensors, bestimmt der Sensortyp die Art der einzusetzenden Signalkonditionierungsschaltung.

Es ist die Aufgabe der vorliegenden Erfindung, eine elektronische Schaltungsanordnung zum Anschluss mindestens eines Drehzahlsensors zu schaffen, welche den Betrieb sowohl aktiver Drehzahlsensoren als auch passiver Drehzahlsensoren ohne einen Austausch der zugeordneten Signalkonditionierungsschaltung gestattet.

Die Aufgabe wird ausgehend von einer elektronischen Schaltungsanordnung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Signalkonditionierungsschaltung mit Mitteln zum wahlweise Anschluss eines aktiven Drehzahlsensors oder eines passiven Drehzahlsensors umfasst.

Der Vorteil der erfindungsgemäßen Lösung liegt insbesondere darin, dass zum Anschluss beispielsweise eines aktiven Drehzahlsensors anstelle eines passiven Drehzahlsensors nicht auch die dazugehörige Signalkonditionierungsschaltung auszutauschen ist. Die Signalkonditionierungsschaltung arbeitet somit unabhängig vom angeschalteten Sensortyp und ist zur Signalverarbeitung von Drehzahlsignalen sowohl von aktiven Drehzahlsensoren als auch passiven Drehzahlsensoren eingerichtet.

Vorzugsweise umfassen die Schaltungsmittel zum wahlweise Anschluss eines aktiven Drehzahlsensors oder eines passiven Drehzahlsensors zum Einen eine Signalkonditionierungsteilschaltung für den aktiven Drehzahlsensor und zum Anderen eine Signalkonditionierungsteilschaltung für den passiven Drehzahlsensor. Je nach angeschlossenem Sensortyp ist die richtige Signalkonditionierungsteilschaltung mittels mindestens eines Schaltelements aktivierbar.

Vorteilhafterweise dient die elektronische Steuereinheit dem automatischen Erkennen des aktuell angeschlossenen Sensortyps, worauf diese das mindestens eine Schaltelement zur Auswahl der geeigneten Signalkonditionierungsteilschaltung betätigt. Alternativ hierzu ist es auch möglich, die entsprechende Betätigung des Schaltelements manuell, beispielsweise mittels eines Kippschalters auszuführen. Die automatische Betätigung über die elektronische Steuereinheit hat jedoch den Vorteil, dass Einstellarbeiten zur Anpassung an den angeschlossenen Sensortyp gänzlich entfallen, was den Montagaufwand reduziert und auch eventuelle Anschlussfehler vermeidet. Gemäß einer bevorzugten Ausführungsform ist das Schaltelement zur Auswahl der Signalkonditionierungsteilschaltung nach Art eines bipolaren Transistors ausgebildet, dessen Basisanschluss über die elektronische Steuereinheit ansteuerbar ist. Alternativ hierzu ist es auch möglich, das Schaltelement als FET-Transistor oder als Relais oder dergleichen auszuführen.

Gemäß einer weiteren die Erfindung verbessernden Maßnahme ist vorgesehen, dass je ein Schaltelement parallel zu den beiden Sensoreingängen A und B der Signalkonditionierungsteilschaltung für den passiven Drehzahlsensor geschaltet ist, wobei jeweils vorgeschaltete Schutzdioden zur Verhinderung eines schädigenden Stroms aus der Signalkonditionierungsteilschaltung für den aktiven Drehzahlsensor im Falle des Anschlusses eines passiven Drehzahlsensors vorgesehen sind. Es wird hier also von einer Signalkonditionierungsteilschaltung für einen passiven Drehzahlsensor ausgegangen, die um eine Signalkonditionierungsteilschaltung für den aktiven Drehzahlsensor erweitert wird. Die Schutzdioden ermöglichen die schaltungstechnische Kombination beider Signalkonditionierungsteilschaltungen auf einfache Weise.

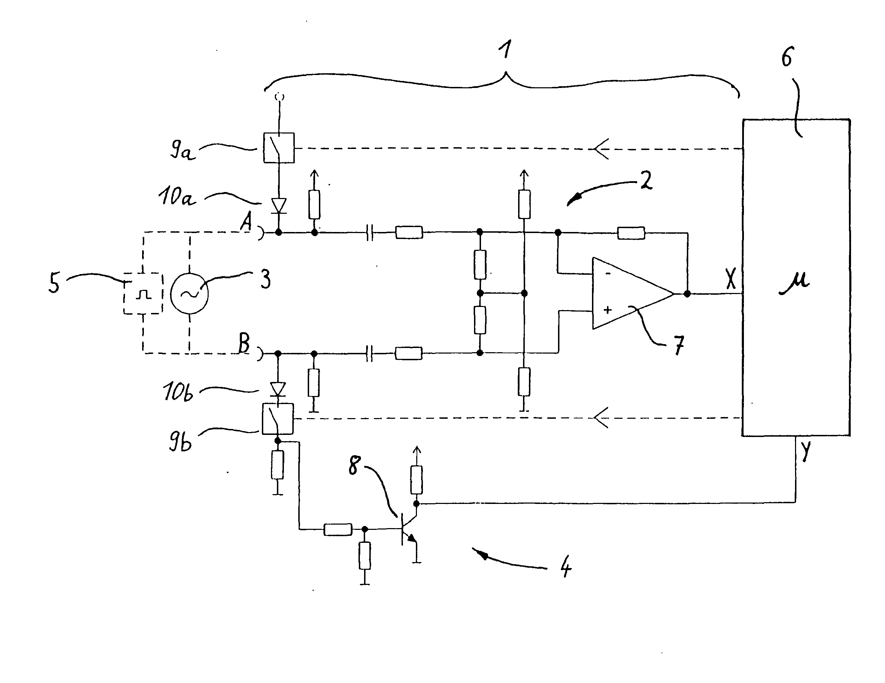

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine elektronische Schaltungsanordnung zum wahlweise Anschluss eines aktiven Drehzahlsensors oder eines passiven Drehzahlsensors an eine elektronische Steuereinheit eines Nutzfahrzeuges.

Eine Signalkonditionierungsschaltung 1 besteht aus einer Signalkonditionierungsteilschaltung 2 für einen passiven Drehzahlsensor 3 und aus einer weiteren Signalkonditionierungsteilschaltung 4 für einen aktiven Drehzahlsensor 5. Beide Signalkonditionierungsteilschaltungen 2 und 4 dienen einer Pegelanpassung der von den Drehzahlsensoren 3 bzw. 5 abgegebenen Drehzahlsignale für eine nachgeschaltete elektronische Steuereinheit 6, die hier in Form eines Mikrokontrollers ausgebildet ist. Die Signalkonditionierungsteilschaltung 2 für den passiven Drehzahlsensor 3 umfasst neben einer Widerstandsbeschaltung der beiden Sensoreingänge A und B einen Komparator 7, dessen Ausgangssignal über einen ersten Signaleingang X der elektronischen Steuereinheit 6 zugeht. Dagegen ist die Signalkonditionierungsschaltung 4 für den aktiven Drehzahlsensor 5 hier als Widerstandsbeschaltung mit nachgeordnetem Transistortreiber 8 ausgeführt, dessen Ausgangssignal über den zweiten Signaleingang Y zur elektronischen Steuereinheit 6 gelangt.

Die Signalkonditionierungsschaltung 1 umfasst weiterhin auch zwei Schaltelemente 9a und 9b zur Aktivierung einer der beiden Signalkonditionierungsteilschaltungen 2 oder 4 je nach Sensortyp. Die Schaltelemente 9a und 9b sind als bipolare Transistoren ausgebildet, welche von der elektronischen Steuereinheit 6 angesteuert werden (Strichlinien). Die elektronische Steuereinheit 6 erkennt den aktuell angeschlossenen Sensortyp und betätigt beide Schaltelemente 9a und 9b zur Auswahl der dazugehörigen Signalkonditionierungsteilschaltung 2 oder 4. Die mit entsprechender Software ausgerüstete elektronische Steuereinheit 6 prüft bei Inbetriebnahme, ob ein aktiver Drehzahlsensor 5 am Sensoreingang A, B angeschlossen ist. Falls der angeschlossene Drehzahlsensor bei Stillstand des Fahrzeugs ein Signal liefert, so handelt es sich um einen aktiven Drehzahlsensor 5, der am Sensoreingang A, B angeschlossen ist. Liegt am Sensoreingang A, B dagegen bei Stillstand des Fahrzeugs kein Signal an, so handelt es sich um einen passiven Drehzahlsensor 3. Die Tatsache, dass überhaupt ein Drehzahlsensor angeschlossen ist, wird über eine - nicht dargestellte - Verbindung von Eingang A und einem Koppelelement von der elektronischen Steuereinheit 6 überwacht.

In Serie zwischen dem Betriebsspannungspotential/Masse und den beiden Sensoreingängen A und B sind jeweils zwei Schutzdioden 10a, 10b der Signalkonditionierungsteilschaltung 4 für den optionalen Drehzahlsensor 5 vorgeschaltet. Die beiden Schutzdioden 10a und 10b dienen hier der Verhinderung eines schädigenden Stroms aus der Signalkonditionierungsteilschaltung 4 für den aktiven Drehzahlsensor 5 im Falle eines Anschlusses eines passiven Drehzahlsensors 3 an die Sensoreingänge A und B. Ebenso bei über der Eingangsspannung liegenden Nebenschlüssen.

Die Erfindung beschränkt sich in ihrer Ausführung nicht auf das vorstehend beschriebene Ausführungsbeispiel. Es sind vielmehr auch Varianten hiervon denkbar, die vom Schutzbereich der nachfolgenden Ansprüche umfasst sind. Somit ist die erfindungsgemäße Lösung auch für diejenigen Signalkonditionierungsteilschaltungen geeignet, bei denen das Signal des passiven Drehzahlsensors auf Masse bezogen ist. In diesen Fall ist der Massebezug durch Einfügen eines weiteren Schalters - vorzugsweise eines Transistors - in die Masseleitung aufzutrennen. Es werden hier also insgesamt drei Schaltelemente benötigt, die vorzugsweise über die elektronische Steuereinheit automatisch angesteuert werden können. Weiterhin ist es auch möglich, die Signalkonditionierungsteilschaltung für den aktiven Drehzahlsensor nach Art eines Komparators mit Hysterese auszuführen, um eine geeignete Pegelanpassung zu erzielen.

### Bezugszeichenliste

- 1: Signalkonditionierungsschaltung
- 2: erste Signalkonditionierungsteilschaltung
- 3: passiver Drehzahlsensor
- 4: zweite Signalkonditionierungsteilschaltung
- 5: aktiver Drehzahlsensor
- 6: elektronische Steuereinheit
- 7: Komparator
- 8: Transistortreiber
- 9: Schaltelement
- 10: Schutzdiode

- A: erster Sensoreingang
- B: zweiter Sensoreingang
- X: erster Signaleingang
- Y: zweiter Signaleingang

## Patentansprüche

1. Elektronische Schaltungsanordnung zum Anschluss mindestens eines Drehzahlsensors eines Fahrzeuges über eine zugeordnete Signalkonditionierungsschaltung (1) an eine elektronische Steuereinheit (6) zur weiteren Signalverarbeitung des Drehzahlsignals,
**dadurch gekennzeichnet, dass** die Signalkonditionierungsschaltung (1) Schaltungsmittel zum wahlweise Anschluss eines aktiven Drehzahlsensors (5) oder eines passiven Drehzahlsensors (3) umfasst.

2. Elektronische Schaltungsanordnung nach Anspruch 1,
**dadurch gekennzeichnet, dass** die Schaltungsmittel zum wahlweise Anschluss eines aktiven Drehzahlsensors (5) oder eines passiven Drehzahlsensors (3) zum einen eine Signalkonditionierungsteilschaltung (4) für den aktiven Drehzahlsensor (5) und zum anderen eine Signalkonditionierungsteilschaltung (2) für den passiven Drehzahlsensor (3) umfasst, welche je nach dem angeschlossenem Sensortyp mittels mindestens eines Schaltelements (9a, 9b) aktivierbar sind.

3. Elektronische Schaltungsanordnung nach Anspruch 2,
**dadurch gekennzeichnet, dass** die elektronische Steuereinheit (6) den aktuell angeschlossenen Sensortyp erkennt und das mindestens eine Schaltelement (9a, 9b) zur Auswahl der geeigneten Signalkonditionierungsteilschaltung (2 oder 4) betätigt.

4. Elektronische Schaltungsanordnung nach Anspruch 2 oder 3,
**dadurch gekennzeichnet, dass** das Schaltelement (9a, 9b) nach Art eines bipolaren Transistors ausgebildet ist.

5. Elektronische Schaltungsanordnung nach Anspruch 3,
**dadurch gekennzeichnet, dass** je ein Schaltelement (9a, 9b) in Serie zwischen Betriebsspannungspotential/Masse und den beiden Sensoreingängen A und B der Signalkonditionierungsteilschaltung (2) für den passiven Drehzahlsensor (3) geschaltet ist, wobei jeweils vorgeschaltete Schutzdioden (10a, 10b) zur Verhinderung eines Stroms aus der Signalkonditionierungsteilschaltung (4) für den aktiven Drehzahlsensor (5) im Falle des Anschlusses eines passiven Drehzahlsensors (3) vorgesehen sind.

6. Elektronische Schaltungsanordnung nach einem der vorstehenden Ansprüche,
**dadurch gekennzeichnet, dass** die Signalkonditionierungsschaltung (1) mindestens einen Komparator (7) umfasst.

7. Elektronische Schaltungsanordnung nach einem der vorstehenden Ansprüche,
**dadurch gekennzeichnet, dass** die elektronische Steuereinheit (6) einen Mikrokontroller zur eingangsseitigen Zuführung des Drehzahlsignals umfasst.

8. Nutzfahrzeug, umfassend eine elektronische Schaltungsanordnung nach einem der vorstehenden Ansprüche.

## Claims

1. Electronic circuitry for connecting at least one speed sensor of a vehicle via an appertaining signal-conditioning circuit (1) to an electronic controller (6) for further signal processing of the speed signal, **characterised in that** said signal-conditioning circuit (1) comprises switching means for the selective connection of an active speed sensor (5) or a passive speed sensor (3).

2. Electronic circuitry according to Claim 1,
**characterised in that** said switching means for the selective connection of an active speed sensor (5) or a passive speed sensor (3) comprise, on the one hand, a signal-conditioning sub-circuit (4) for said active speed sensor (5) and, on the other hand,
a signal-conditioning sub-circuit (2) for said passive speed sensor (3), which are adapted for being activated by means of at least one switching element (9a, 9b), depending on the connected type of sensor.

3. Electronic circuitry according to Claim 2,
**characterised in** said that said electronic controller (6) recognises the currently connected type of sensor and operates said at least one switching element (9a, 9b) for the selection of the appropriate signal-conditioning sub-circuit (2 or 4).

4. Electronic circuitry according to Claim 2 or 3,
**characterised in that** said switching element (9a, 9b) is configured in the form of a bipolar transistor.

5. Electronic circuitry according to Claim 3,
**characterised in that** one respective switching element (9a, 9b) is connected in series between the operating voltage potential/ground and the two sensor inputs A and B of said signal-conditioning sub-circuit (2) for said passive speed sensor (3), with respective protective diodes (10a, 10b) connected upstream being provided for preventing a current flow from said signal-conditioning sub-circuit (4) for said active speed sensor (5) in the event of connection of a passive speed sensor (3).

6. Electronic circuitry according to any of the preceding Claims,
**characterised in that** said signal-conditioning circuit (1) comprises at least one comparator (7).

7. Electronic circuitry according to any of the preceding Claims,
**characterised in that** said electronic controller (6) comprises a micro-controller for supplying a speed signal on the input side.

8. Commercial vehicle, comprising an electronic circuitry according to any of the preceding Claims.

## Revendications

1. Système de circuits électroniques à relier au moins un capteur de vitesse de roue d'un véhicule via un circuit de conditionnement des signaux (1) affecté à une unité de commande électronique (6) pour le traitement ultérieur du signal de vitesse de roue, **caractérisé en ce que** ledit circuit de conditionnement des signaux (1) comprend des moyens commutateurs pour la connexion sélective d'un capteur de vitesse de roue actif (5) ou d'un capteur de vitesse de roue (3) passif.

2. Système de circuits électroniques selon la revendication 1,
**caractérisé en ce que** lesdits moyens commutateurs pour la connexion sélective d'un capteur de vitesse de roue (5) actif ou d'un capteur de vitesse de roue (3) passif comprennent, d'un côté, un sous-circuit de conditionnement des signaux (4) pour ledit capteur de vitesse de roue (5) actif et, d'autre côté,
un sous-circuit de conditionnement des signaux (2) pour ledit capteur de vitesse de roue (3) passif, qui sont aptes à être activé au moyen d'au moins une élément commutateur (9a, 9b), selon le type de capteur relié.

3. Système de circuits électroniques selon la revendication 2,
**caractérisé en ce que** ladite unité de commande électronique (6) reconnaît le type de capteur actuellement relié et commande ledit au moins un élément commutateur (9a, 9b) pour la sélection du sous-circuit approprié de conditionnement des signaux (2 ou 4).

4. Système de circuits électroniques selon la revendication 2 ou 3,
**caractérisé en ce que** ledit élément commutateur (9a, 9b) est configuré sous forme d'un transistor bipolaire.

5. Système de circuits électroniques selon la revendication 3,
**caractérisé en ce qu'**un élément commutateur (9a, 9b) respectif est monté en série entre le potentiel de tension de régime/terre et les deux entrées de capteur A et B dudit sous-circuit de conditionnement des signaux (2) pour ledit capteur de vitesse de roue (3) passif, aux diodes de protection respectives (10a, 10b) reliées en amont étant montées afin d'empêcher l'écoulement d'un courant à partir dudit sous-circuit de conditionnement des signaux (4) pour ledit capteur de vitesse de roue (5) actif au cas de la connexion d'un capteur de vitesse de roue (3) passif.

6. Système de circuits électroniques selon une quelconque des revendications précédentes,
**caractérisé en ce que** ledit circuit de conditionnement des signaux (1) comprend au moins un comparateur (7).

7. Système de circuits électroniques selon une quelconque des revendications précédentes,
**caractérisé en ce que** ladite unité de commande électronique (6) comprend une micro unité de commande afin de fournir un signal de vitesse de roue du côté d'entrée.

8. Véhicule utilitaire, comprenant un système de circuits électroniques selon une quelconque des revendications précédentes.
